Europäisches Patentamt

European Patent Office

Office européen des brevets

(19)

(11) Veröffentlichungsnummer: **0 244 552 B1**

## (12) EUROPÄISCHE PATENTSCHRIFT

(45) Veröffentlichungstag der Patentschrift: **04.09.91**

(51) Int. Cl.5: **F16F 13/00**

(21) Anmeldenummer: **86890133.1**

(22) Anmeldetag: **09.05.86**

(54) Schwingungsdämpfer für Maschinenlagerungen.

(43) Veröffentlichungstag der Anmeldung:
**11.11.87 Patentblatt 87/46**

(45) Bekanntmachung des Hinweises auf die
Patenterteilung:
**04.09.91 Patentblatt 91/36**

(84) Benannte Vertragsstaaten:
**AT BE CH DE FR GB IT LI NL SE**

(56) Entgegenhaltungen:
**DE-B- 1 019 918
FR-A- 1 128 058
US-A- 3 912 248
US-A- 4 087 085**

(73) Patentinhaber: **Ing. Alfred C. Glaunach Technisches Büro
Koningsbergerstrasse 22
A-9020 Klagenfurt(AT)**

(72) Erfinder: **Glaunach, Alfred C.
Hangweg 26
A-9210 Pörtschach(AT)**

(74) Vertreter: **Torggler, Paul, Dr. et al
Patentanwälte Dr. Paul Torggler DDr. Engelbert Hofinger Wilhelm-Greil-Strasse 16
A-6020 Innsbruck(AT)**

## Beschreibung

Die Erfindung betrifft einen Schwingungsdämpfer für Maschinenlagerungen oder dergleichen, mit einem Unterteil, der ein Gefäß mit einer Füllung von einer zähen Flüssigkeit aufweist, mit einem Oberteil, der mit einem Tauchkolben von oben her in die Flüssigkeit ragt, wobei der Tauchkolben in der Flüssigkeit zur Bremsung von Schwingungsausschlägen gleichzeitig in alle Richtungen angeordnet ist, und mit mindestens einer zwischen dem Unterteil und dem Oberteil kraftschlüssig angeordneten und ohne Berührung mit der Flüssigkeit stehenden Feder.

Häufig müssen Maschinen elastisch gelagert werden. Hierbei wird zumeist unter der Maschine ein schwerer Fundamentblock angeordnet, der sich auf elastische Lager abstützt. Bei Fundamenten auf Stahlfedern ist es oft zweckmäßig, zur Vermeidung großer Schwingweiten eine Schwingungsbedämpfung vorzusehen. Als Dämpfungsvorrichtung kann ein mit dem Fundamentblock verbundener Tauchkolben angeordnet werden, der in eine zähe Flüssigkeit eintaucht. Durch eine derartige Anordnung können Schwingungsausschläge nach allen Richtungen gleichzeitig gebremst werden. Hiebei kann der Tauchkolben z.B. glockenförmig gestaltet sein. Aus Platzgründen kann der Schwingungsdämpfer auch neben einem Federpaket angeordnet sein.

Die Aufgabenstellung der Erfindung besteht darin, eine besonders platzsparende Anordnung des Schwingungsdämpfers neben einem oder mehreren Federelementen zu suchen. Wegen der beengten Verhältnisse unter einem Maschinenfundament liegt ein weiterer Gegenstand der Aufgabenstellung darin, zu einer einfachen Montagevorrichtung für den Schwingungsdämpfer zu kommen.

Es wurde bereits in der FR - A - 1.128.058 vorgeschlagen, bei solchen Schwingungsdämpfern im Zentrum des Gefäßes für die Flüssigkeit eine dichte Hülse vorzusehen, und in der Hülse eine Feder anzuordnen. Bei dieser Vorrichtung verbleibt für die Flüssigkeit ein Ringraum zwischen der Hülse und der Wand des Gefäßes, wobei der Platz für den Tauchkolben und für die Strömung um den schwingenden Tauchkolben jedoch beengt ist.

Die vorliegende Erfindung hat das Ziel, bei einer platzsparenden Bauart der Vorrichtung immer noch eine einwandfreie Flüssigkeitsbedämpfung von Querausschlägen des Tauchkolbens zu gewährleisten.

Erfindungsgemäß ist die Lösung der Aufgabenstellung dadurch gekennzeichnet, daß mindestens eine vorgespannte Feder ganz innerhalb der Wandungen des Tauchkolbens vorgesehen ist, daß als Widerlager für die Feder mindestens ein zwischen die Wandungen des Tauchkolbens aufragender Stempel angeordnet ist, und daß zwischen dem Unterteil und dem Oberteil eine höhenverstellbare Montagevorrichtung vorgesehen ist, wobei mindestens eine Schraubenmutter - Schraubenbolzen - Anordnung im eingebauten Zustand des Schwingungsdämpfers von der Seite her betätigbar ist. Eine bevorzugte Ausgestaltung der Erfindung sieht auch vor, daß die höhenverstellbare Montagevorrichtung zwischen den Wandungen des Tauchkolbens angeordnet ist, wobei in der Wandung des Tauchkolbens eine Öffnung für die Betätigung der Schraubenmutter - Schraubenbolzen - Anordnung vorgesehen ist.

Besonders zweckmäßig ist es, wenn die Schraubenmutter - Schraubenbolzen - Anordnung im eingebauten Zustand des Schwingungsdämpfers demontierbar ausgebildet ist. Hiebei kommen u.a. auch Ausbildungen mit Schraubenverbindungen, Bajonetverschlüssen und Ankerschienen in Betracht.

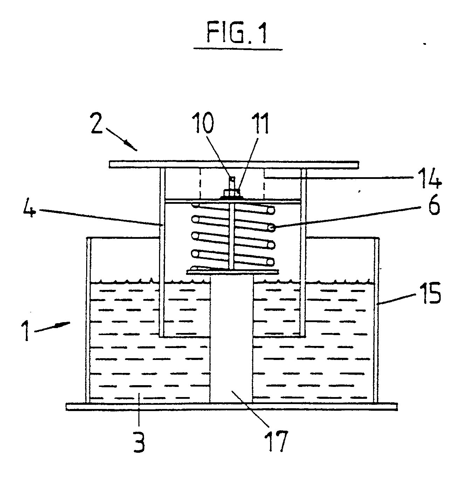

Die Erfindung wird an Hand des in der Zeichnung schematisch dargestellten Ausführungsbeispiels erläutert. Die Fig. 1 zeigt einen schematischen Schnitt durch einen Schwingungsdämpfer nach einer erfinderungsgemäßen Ausführungsform.

Der in Figur 1 gezeigte Schwingungsdämpfer weist einen Unterteil 1 mit einem Gefäß 15 auf, das teilweise mit einer Dämpfungsflüssigkeit 3 gefüllt ist. Der Oberteil 2 ist mit dem nicht dargestellten Maschinenfundament verbunden, und ragt mit einem Tauchkolben 4 von oben her in die Flüssigkeit 3. An der Unterseite weist der Tauchkolben 4 eine Öffnung auf. Vom Boden des Gefäßes 15 ragt ein Stempel 17 bis über den Flüssigkeitsspiegel auf. Der Stempel 17 trägt eine Feder 6. Die Feder 6 und der Stempel 17 sind gleichachsig mit dem Tauchkolben 4 angeordnet. Auf der Feder 6 liegt eine Zwischenplatte auf, die im Inneren des Tauchkolbens eingeschweißt ist. Axial in der Feder 6 ist ein Schraubenbolzen 10 angeordnet, der vom Stempel 17 weg nach oben ragt und eine Öffnung in der eingeschweißten Zwischenplatte durchsetzt. Der Schraubenbolzen 10 trägt oberhalb der eingeschweißten Zwischenplatte eine Schraubenmutter 11 wobei durch Anziehen der Schraubenmutter 11 die Feder 6 zusammendrückbar ist. In der Wandung des Tauchkolbens 4 ist eine Öffnung 14 vorgesehen, um die Schruabenmutter - Schraubenbolzen - Anordnung 10,11 betätigen zu können.

## Patentansprüche

1. Schwingungsdämpfer für Maschinenlagerungen o. dgl., mit einem Unterteil (1), der ein Gefäß (15) mit einer Füllung von einer zähen Flüssigkeit (3) aufweist, mit einem Oberteil (2), der mit einem Tauchkolben (4) von oben her in die Flüssigkeit (3) ragt, wobei der Tauchkolben (4) in der Flüssigkeit zur Bremsung von Schwingungsausschlägen gleichzeitig in alle Richtungen bewegbar angeordnet ist, und mit mindestens einer zwischen dem Unterteil (1) und dem Oberteil (2) kraftschlüssig angeordneten und ohne Berührung mit der Flüssigkeit (3) stehenden Feder (6), dadurch gekennzeichnet, daß mindestens eine vorgespannte Feder (6) ganz innerhalb der Wandungen des Tauchkolbens (4) vorgesehen ist, daß als Widerlager für die Feder (6) mindestens ein zwischen die Wandungen des Tauchkolbens (4) vom Boden des Gefäßes (15) aufragender Stempel (17) angeordnet ist, und daß zwischen dem Unterteil (1) und dem Oberteil (2) eine höhenverstellbare Montagevorrichtung vorgesehen ist, wobei mindestens eine Schraubenmutter - Schraubenbolzen - Anordnung (8,9,10,11,12,13) im eingebauten Zustand des Schwingungsdämpfers von der Seite her betätigbar ist.

2. Schwingungsdämpfer nach Anspruch 1, dadurch gekennzeichnet, daß die höhenverstellbare Montagevorrichtung zwischen den Wandungen des Tauchkolbens (4) angeordnet ist, wobei in der Wandung des Tauchkolbens (4) eine Öffnung (14) für die Bestätigung der Schraubenmutter - Schraubenbolzen - Anordnung (10,11) vorgesehen ist.

3. Schwingungsdämpfer nach Anspruch 1 oder 2, dadurch gekennzeichnet, daß die Schraubenmutter - Schraubenbolzen - Anordnung (8,9) im eingebauten Zustand des Schwingungsdämpfers demontierbar ausgebildet ist.

**Claims**

1. Vibration absorber for machine mountings or the like, comprising a lower part (1) having a vessel (15) with a filling of viscous liquid (3), an upper part (2) extending with a plunger (4) from above into the liquid (3), the plunger (4) being simultaneously movable in the liquid into all directions to brake the vibrational displacements, and comprising at least one spring (6) located between the lower part (1) and the upper part (2) in force-transmitting arrangement without contacting the liquid (3), characterized in that at least one pretensioned spring (6) is provided fully within the walls of the plunger (4), that at least one piston (17) standing up between the walls of the plunger (4) from the bottom of the vessel (15) is provided as an abutment for the spring (6), and that a height-adjustable mounting device is provided between the lower part (1) and the upper part (2), at least one screw nut - screw bolt - arrangement (8,9,10,11,12,13) being laterally actuable, when the vibration absorber is in the mounted condition.

2. Vibration absorber according to claim 1, characterized in that the height-adjustable mounting device is arranged between the walls of the plunger (4), an opening (14) for actuating the screw nut - screw bolt - arrangement (10,11) being provided in the wall of the plunger (4).

3. Vibration absorber according to claim 1 or 2, characterized in that the screw nut - screw bolt - arrangement (8,9) is demountable, when the vibration absorber is in the mounted condition.

**Revendications**

1. Amortisseur de vibration pour supports de machines ou analogues, comportant une partie inférieure (1), qui est pour-vue d'un récipient (15) contenant une charge d'un liquide visqueux (3), une partie supérieure (2) qui pénètre par un piston plongeur (4), par le haut, dans le liquide (3), ce piston plongeur (4) étant agencé de façon à pouvoir être déplaçable simultanément dans toutes les directions en vue d'un amortissement de déplacements vibratoires, ainsi qu'au moins un ressort (6), disposé avec conjugaison de forces entre la partie inférieure (1) et la partie supérieure (2) et sans contact avec le liquide (3), caractérisé en ce qu'il est prévu au moins un ressort précontraint (6) complètement à l'intérieur des parois du piston plongeur (4) en ce qu'il est prévu, comme contre-appui pour le ressort (6), au moins un poinçon (17) s'engageant entre les parois du piston plongeur (4) à partir du fond du récipient (15), et en ce qu'il est prévu entre la partie inférieure (1) et la partie supérieure (2) un dispositif de montage réglable en hauteur, au moins un ensemble d'écrou et boulon (8, 9, 10, 11, 12, 13) pouvant être actionné par le côté dans la condition d'installation de l'amortisseur de vibration.

2. Amortisseur de vibration selon la revendication 1, caractérisé en ce que le dispositif de montage réglable en hauteur est disposé entre les parois du piston plongeur (4) et en ce qu'il est prévu dans la paroi du piston plongeur (4) une ouverture (14) pour l'actionnement de l'ensemble écrou-boulon (10, 11).

3. Amortisseur de vibration selon la revendication 1 ou 2, caractérisé en ce que l'ensemble écrou-boulon (8, 9) est agencé de façon à pouvoir être démonté dans la condition d'installation de l'amortisseur de vibration.

## FIG.1